# EUROPEAN PATENT SPECIFICATION

(11) **EP 0 467 617 B1**
(45) Date of publication and mention of the grant of the patent: **18.01.1995**
(21) Application number: 91306381.4
(22) Date of filing: 15.07.1991
(51) Int. Cl.: C01F 7/14

(54) **Improved precipitation vessel**
Fällungsbehälter
Récipient de précipitation

(30) Priority: 20.07.1990 US 556118
(43) Date of publication of application: 22.01.1992
(73) Proprietor: ALCAN INTERNATIONAL LIMITED, Montreal Quebec H3A 3G2 (CA)
(72) Inventor: Bouchard, Jacques, Hampstead, Quebec H3X 2Y2 (CA); Hiscox, Bryan, Dollard, Quebec H9D 1X8 (CA); Ellis,Charles D., Dollard, Quebec H9B 2T1 (CA)
(74) Representative: Wilkinson, Stephen John

(56) References cited:
- DD-A- 83 119
- FR-A- 894 662
- US-A- 2 606 820
- US-A- 3 486 850
- US-A- 3 607 113

## Description

### Technical Field

The present invention relates to an improved precipitation vessel and more particularly to a precipitation vessel for the precipitation of alumina from Bayer process pregnant liquor, wherein the vessel is equipped with a draft tube agitator or circulator and a heat exchanger apparatus mounted inside the draft tube circulator.

### Background Art

The Bayer process for producing alumina trihydrate from bauxite ores involves dissolving the alumina contained in the ores in caustic solution to form pregnant liquor, followed by precipitation of alumina trihydrate from the pregnant liquor. The precipitation process is usually aided by the addition of alumina trihydrate seed.

Typically, precipitation of alumina trihydrate takes place in a series of large vessels (1-5000 M³ capacity), and the slurry of pregnant liquor and seed is circulated using a draft tube circulator or agitator. Keeping the slurry in constant motion exposes the surfaces of the seed to fresh pregnant liquor, thereby increasing the rate of alumina trihydrate crystal formation and growth. While use of draft tube circulators has increased the efficiency and yield of the precipitation process, the recognition that the precipitation rate is in part dependent on temperature has caused aluminum producers to experiment with and use various means for controlling the temperature of the Bayer process liquor to cool or heat the contents of the vessel as desired at various stages of the process.

In particular, the discovery that the preferred temperature for crystallization falls as the crystallization proceeds has led the industry to install various cooling devices in the Bayer process precipitation circuit. For example, cooling jackets have been installed around the external standpipes of batch operated Pachuka tanks, as illustrated in Soviet Union Patent No. 663,745. In addition, flat pancake cooling coils have been installed in the annular space between the draft tube circulator and the tank wall in draft tube agitated precipitation vessels.

U.S. Patent No. 3,486,850 appears to disclose another method of cooling Bayer process liquor during the precipitation process. According to the disclosure of that patent, the precipitation rate and yield of alumina trihydrate can be increased by installation of vacuum flash tank coolers in a chain of continuous precipitation vessels.

None of the foregoing attempts at controlling the temperature of Bayer process liquor during precipitation has been entirely successful, and the attempts reviewed above generally involve costly apparatus, but achieve only relatively low efficiency. In the case where heat exchangers have been installed around the draft tube agitators, alumina trihydrate scale deposited itself on the coils and heat exchange surfaces of the heat exchanger, and this excessive scale build-up decreased the heat exchange efficiency of the apparatus.

### Disclosure of the Invention

To overcome these disadvantages, the present invention provides an improved precipitation vessel for precipitation of alumina trihydrate in the Bayer process for recovery of alumina from Bauxite ore. The vessel comprises a tank having a bottom and sidewalls defining an interior volume for containing a fluid. The vessel also includes a draft tube circulator mounted inside the tank and including fluid circulating means, a cylindrical column having openings adjacent upper and lower ends, and a heat exchanger for cooling the Bayer process liquor. According to the novel feature, the heat exchanger includes a plurality of heat exchange elements or coils with heat exchange surfaces mounted either radially or peripherally inside the draft tube. With the heat exchanger so positioned, when a slurry or fluid containing abrasive particles circulates through the draft tube, the abrasive particles in the fluid act to scour exposed surfaces on the heat exchanger to substantially prevent accumulation of scale thereon. An inlet pipe extends from the heat exchanger to outside the tank for supplying a heat exchange fluid to the heat exchange elements, and an outlet pipe extends from outside the tank for removing the heat exchange fluid from the heat exchanger.

The cylindrical column preferably includes a funnel shaped fluid inlet adjacent the upper end and a plurality of legs defining openings between adjacent legs at the lower end.

The heat exchange elements can extend radially from a central point in the draft tube or can be arranged around the inside periphery of the cylindrical column. Where the heat exchange elements are arranged radially, they can be supported on a central support pipe, which can also serve as an inlet pipe and as a further heat exchange surface. Alternatively, the heat exchange elements can be fastened to the wall of the cylindrical column.

The invention, together with further objects and advantages, will best be understood by reference to the following detailed description taken in connection with the accompanying drawings.

### Brief Description of the Drawings

Figure 1 is a front elevation sectional view of a precipitation vessel embodying the present invention.

Figure 2 is a perspective view of another embodiment of the precipitation vessel embodying the present invention.

Figure 3 is a front elevation sectional view, partially broken away, of a heat exchange element or coil of Figure 1.

Figure 4 is a sectional view of a portion of the heat exchange element taken along line 4-4 of Fig. 3.

Figure 5 is a front elevation sectional view of another preferred embodiment of the invention of Figure 1.

Figure 6 is a sectional view of the apparatus of Figure 5 taken along line 6-6 of Figure 5.

Figure 7 is a sectional view of another embodiment of a heat exchange element for use in the improved precipitation vessel of the present invention.

### Best Modes For Carrying Out Invention

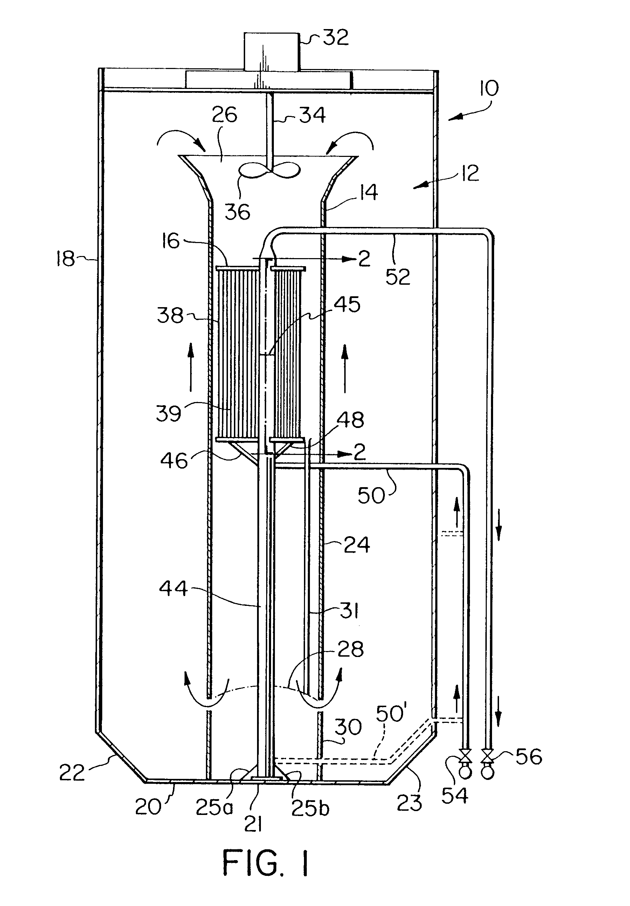

Referring now to the drawings, Fig. 1 depicts an improved precipitation vessel in accordance with the present invention, generally designated by the reference numeral 10. The precipitation vessel 10 of the present invention includes three major structures: a tank 12, a draft tube circulator 14 (also referred to as a draft tube agitator), and a heat exchanger 16. As shown in Fig. 1, the heat exchanger 16 should be mounted inside the draft tube circulator 14 in order to expose the heat exchange surfaces of the heat exchanger 16 to the scouring action of abrasive particles contained in the Bayer process slurry (not shown). This scouring action of the abrasive alumina trihydrate crystal particles in the slurry acts to substantially prevent accumulation of scale on the heat exchanger 16, which helps maintain its efficient operation. This helps avoid the need to shut down the draft tube circulator 16 and empty the tank 10 sufficiently to remove scale which has accumulated on the heat exchanger 16.

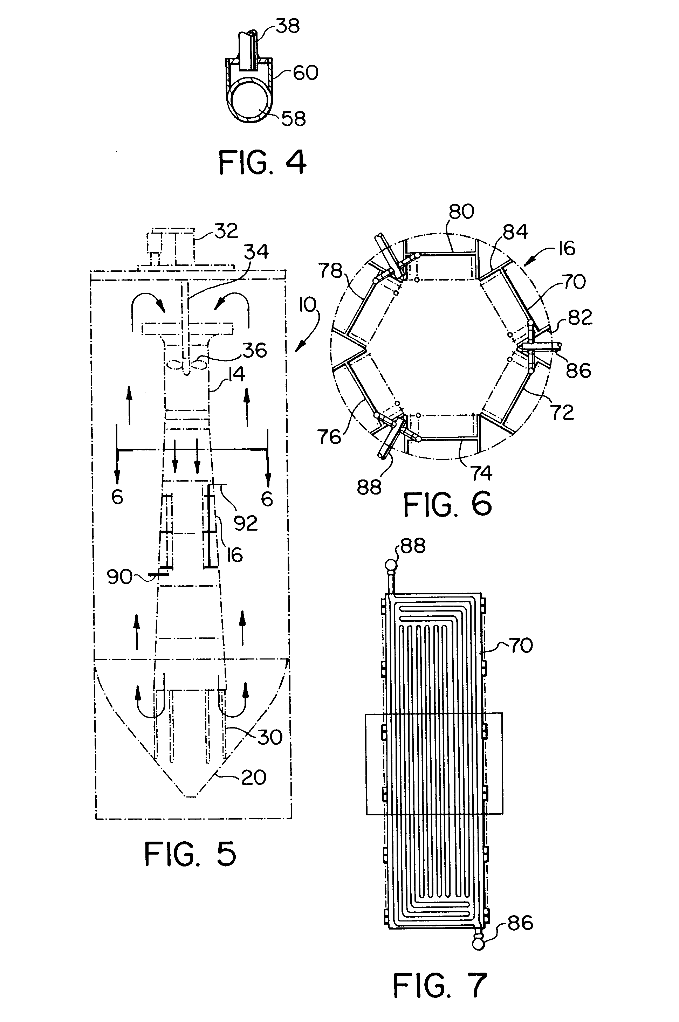

The tank 12 can be any standard or conventional construction or design suitable for precipitation of alumina trihydrate, phosphates or other similar substances from saturated or supersaturated solutions. The tank 12 preferably has generally cylindrically shaped sidewalls 18, as shown in cross-section in Fig. 1. The tank 12 also has a bottom 20 which may be generally flat as shown in Fig. 1 or generally cone shaped as shown in Fig. 4. If a flat bottom tank 12 is used, as shown in Fig. 1, the side walls 18 should preferably have filleted corners 22, 23. Filleted corners 22, 23 help avoid build up of deposits inside the tank which can interfere with symmetrical flow of the fluid being circulated within the tank.

Still referring to Fig. 1, the vessel 10 also includes a draft tube agitator or circulator 14. The draft circulator 14 includes an elongated cylindrical column 24 and has a flow opening adjacent each end 26,28. The upper end 26 is preferably funnel shaped, while the lower end 28, as shown in Figs. 1 and 5, includes a plurality of legs 30a,b,c,d,...n, and spaces between these adjacent legs 30a,b,c,d,...n. The walls of the column above the spaces between the legs, are frequently cut to make long narrow slots 31 extending from the bottom of the column to within one half, or three quarters, or more, of the distance to the top of the cylinder. Slots 31 are often called resuspension slots or vents, and generally extend some distance above the level of completely settled solids. Preferably, there should be six legs 30a, ...,f, and therefore six openings or slots 31a′,...,f′ defined by adjacent legs.

Under normal operating conditions, bypass through the slots 31a,b,c,d,...n amounts to less than 10%. The resuspension slots or vents 31a′,b′,c′,d′,...n′, serve to increase annular velocity toward the top of the tank during normal operating conditions, and to decrease the power and time required to resuspend solids when restarting the draft tube circulator 14. By allowing the fluid to pass through the slots 31a′...n′ at a relatively high velocity shortly after resuming circulation, the fluid progressively erodes and resuspends solids which have settled in the tank 12 while the draft tube circulator 14 has been shut off.

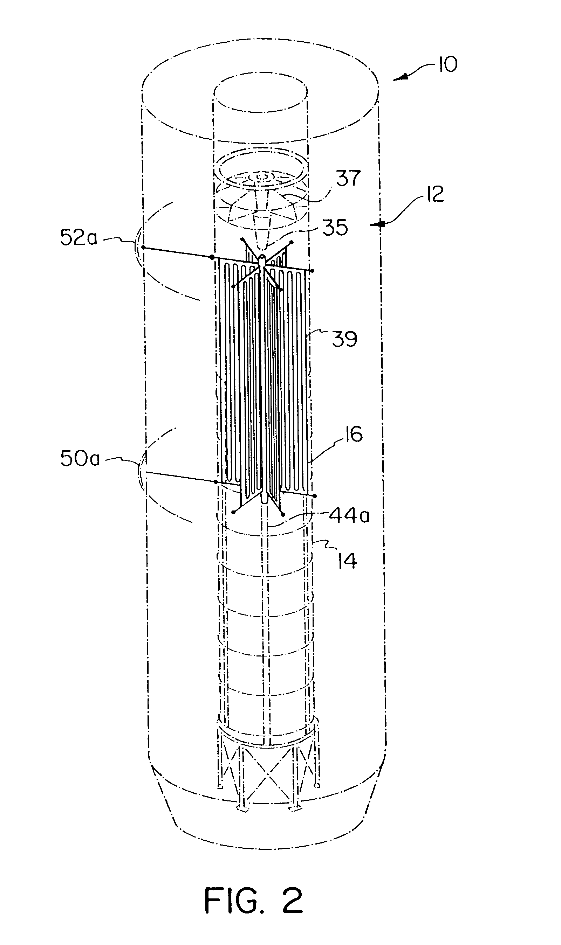

The draft tube circulator 14 may be provided with any suitable circulating means, but preferably includes a motor 32 which rotates a shaft 34 connected to an impeller 36 selected to provide an appropriate fluid flow for a slurry such as seeded pregnant Bayer process liquor. Typically draft tube circulators 14 also have curved stator vanes 37 (see Fig. 2) positioned immediately below the impeller 36 to produce a draft tube flow which is essentially uniformly distributed with a negligible rotational component. Referring again to Fig. 1, the draft tube circulator 14 also has a limit ring (not shown) mounted on top of a diffuser cone 35 (Fig. 2) to limit radial movement of fluid due to random fluid forces. The usual diameter of the draft tube 14 itself is about 20 to 40% of the diameter of the tank 12. Some of the considerations involved in the design of draft tube circulators 14 for use in alumina precipitation are discussed in "The Design of Draft Tube Circulators," Chapter 20 of Oldshue (ed.), Fluid Mixing Technology, (McGraw-Hill 1983) and in Australian Patent No. 438,697. Parts for the construction of a draft tube circulator 14 suitable for an alumina precipitation vessel 10 may be obtained from Mixing Equipment Co., Rochester, New York, as well as from other suppliers.

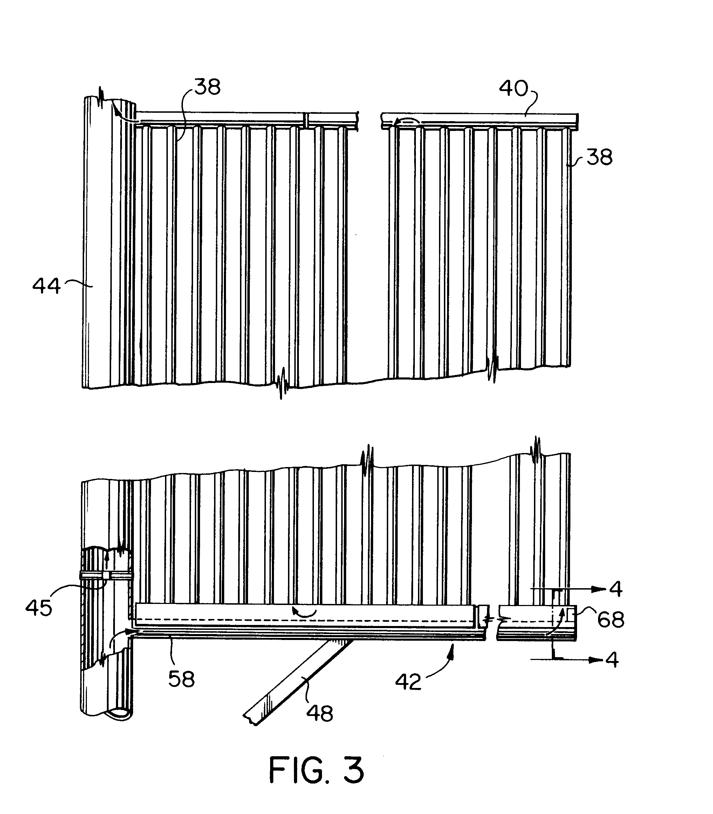

As noted above, important aspects of the present invention include the design and placement of a heat exchange apparatus 16 inside the draft tube circulator 14. In a broad sense, the invention involves placement of a heat exchanger 16 inside the draft tube circulator 14 in a precipitation vessel 10 to take advantage of the scouring effect of the abrasive particles passing through the heat exchanger 16. The invention also includes an embodiment where the heat exchanger 16 forms part of the cylindrical column 24 of the draft tube circulator 14, provided that sufficient scouring of the surface of the heat exchanger 16 takes place to substantially prevent scale buildup thereon. The heat exchanger 16 may be made up of a plurality of coils or elements 39 arranged as shown in Figs. 1 and 2, or placed around the inside periphery of the cylindrical column 24 of the draft tube circulator 14, as shown in Fig. 6. Depending on space and cost considerations, heat exchange elements 39 can be specially fabricated for use in existing or planned draft tube circulators 14, as shown in Figs. 1 and 3, or commercially available plate coil heat exchangers can be used.

Where the heat exchange apparatus 16 is fashioned from tubing, as shown in Fig. 3, it includes a plurality of tubes 38a-n each providing a heat exchange surface capable of absorbing heat from or radiating heat to fluid being circulated in the tank 12. In the embodiment shown in Fig. 3, the tubes 38a-n are in fluid communication with one another, an upper header 40 and a lower header 42. The upper and lower headers 40, 42 in turn are in fluid communication with a central support pipe 44, as shown in Figs. 1 and 3. The lower headers 42 can be supported using braces 46, 48, where required.

Referring to Fig. 1, the central support pipe 44 is attached to the bottom 20 of the tank 12 using an annular ring 21 bolted to the bottom 20 of the tank 12, and supported by additional braces 25a, b if necessary. The use of central support pipe 44 provides several advantages: it supports the heat exchanger 16; it can carry coolant (not shown) to the pipes 38a of the heat exchanger 16; and can act as a heat exchange surface itself. As shown in Fig. 1, an inlet pipe 50 supplies heat exchange fluid to the central support pipe 44, while outlet pipe 52 removes fluid from heat exchanger 16. The inlet 50 and outlet 52 pipes extend through the cylindrical column 24 of the draft tube circulator 14 and through a side wall 18 of the tank 12. The exact placement of the inlet and outlet pipes 50, 52 is mostly a matter of preference, for example, the inlet tube 50′ (Fig. 1) may enter near the bottom 20 of the tank 12. Inlet and outlet shutoff and adjustment valves 54, 56 located outside the tank 12 control fluid flow through the circuit. Preferably, the valves 54, 56 should be located outside the vessel 10 for easiest access.

The central support pipe 44 also should include a constriction or small bore orifice 45 above the feed point for the heat exchange pipes 38a-n, enabling the entire surface of the central support pipe 44 to be used for heat transfer. If, as preferred the central support pipe is made from 30-40 cm steel pipe, the constriction orifice 45 should have about a 38 mm hole. The orifice 45 best shown in Fig. 3 acts as a shunt which diverts part of the flow of heat exchange fluid (not shown) to bypass the lower header 42. Its location above the lower header 42 of the heat exchange element 39 is a matter of mechanical choice, although in the embodiment shown in Fig. 1, the constriction orifice 45, should preferably be welded in place about halfway between the upper 40 and lower header 42.

The upper header 40 of the heat exchange element 39 shown in Fig. 3 should preferably be an 89 mm steel pipe, and preferably should include a shield (not shown) or a protection cap (not shown) to protect the upper header 40 from abrasion and wear caused by alumina trihydrate crystals contained in the slurry being circulated by the draft tube circulator 14. Alternatively, the upper edge of the upper header pipe 40 can be provided with a sacrificial metal edge (not shown), that is, the upper edge is made thicker to allow for abrasion by alumina particles cascading through the draft tube circulator 14. The tube or pipe forming the upper header 40 should be drilled to accept the 38 mm O.D. pipes which will extend longitudinally and preferably perpendicularly from the upper header 40.

The lower header 42 may be made in the same manner as the upper header 40, or preferably it may have the construction depicted in Fig. 4. The lower header 42 shown in Fig. 3 includes a header pipe 58 of the same general dimensions as the upper header 40. Onto this header pipe 58 is welded an inverted U-shaped member 60. As shown in Figs. 3 and 4 the U-shaped member 60 has a hole bored therein to receive each heat exchange tube 38a-n. The lower header 42 pipe also includes at least one opening 68 (see Fig. 3) to allow fluid to pass from the pipe 58 into the U-shaped member 60, and then into the individual heat exchange tubes or pipes 38a-n, as shown in Fig. 3.

The heat exchange element 39 illustrated in Fig. 3 can be assembled by inserting the plurality of longitudinal pipes 38a-n into the holes in the upper header 40 and lower header 42 and welding them in place so that assembled element 39 can contain fluid under the pressures expected under actual conditions of use. Next, the assembled heat exchange element 39 should be welded to the central support pipe 44 at suitable openings (not shown) so that the heat exchange element 39 will be in fluid communication with the central support pipe 44 at the upper 40 and lower 42 headers. The lower header 42 will preferably serve as fluid inlet for the heat exchange element 39, while the upper header 40 serves as a fluid outlet. Once assembled, each heat exchange element 39 will be approximately 185 cm wide and extend about 7.3 meters. Preferably, a typical draft tube circulator 14 will include six such heat exchange elements 39 arranged radially, as best shown in Fig. 2. The heat exchange 39 element can be supported with one or more braces 46, 48 which transfer the weight of the element to the central support column 44 in the manner shown in Figs. 1 and 3. Where the heat exchanger 16 is used in precipitation vessels 10 for the Bayer process, it should be mounted so that it will be above the settled hydrate level in the tank 12. Improved fluid flow may be obtained if each heat exchange element 39a is placed above a respective leg 30a, that is to say, between the resuspension slots 31.

An inlet pipe 50 originates outside the tank 12, extends through the tank wall 18 as well as the wall of the cylindrical column 24 of the draft tube circulator 14 into the central support pipe 44. Its exact point of entry into the central support pipe 44 is mostly a matter of design choice, and may be just below the brace 48 as shown in Fig. 1 or the pipe 50a may enter near the bottom 20 (see Fig. 1) of the tank 12. Similarly, an outlet pipe 52 preferably extends from the upper part of the central support pipe 44 through the draft tube wall 14 and the tank wall 18. Preferably, both the inlet pipe 50 and the outlet pipe 52 are connected to valves 54, 56 outside the tank 12 for controlling heat exchange fluid flow.

In addition to the configuration shown in Fig. 3, the heat exchanger 16 may comprise a plurality of commercially available plate coil heat exchange elements 70, as shown in Fig. 7. These elements 70 may be assembled in the draft tube 14 in a radial configuration, as shown in Fig. 2, or spaced around the inside periphery of the cylindrical column 24 forming the draft tube circulator 14, as shown in Figs. 5 and 6. Suitable commercially assembled plate coils 70 for use in the present invention may be obtained from Tranter Inc., Augusta, Georgia or from Nixon Plate Coils Limited, Gromley, Ontario, Canada.

The radial configuration of commercially available plate coils 70 may include the use of the central support pipe 44 similar to that depicted in Fig. 1, which would support the plate coils 70 and serve as a fluid inlet and heat transfer surface. Each plate coil 70 may also be affixed directly to the cylindrical column 24 of the draft tube 14, as shown in Fig. 2. In this embodiment, the plate coils 70a-f radiate from a central pipe 44a which does not support the heat exchanger 16, but does permit fluid flow among the plate coils 70a-f in the array. An inlet pipe 50a feeds a heat transfer fluid, such as cold or hot water, to the array of plate coils 70a-f. Similarly, an outlet pipe 52a removes heat exchange fluid from the heat exchanger 16 to a pump (not shown) for further use or disposal.

As mentioned above, the heat exchanger 16 can also be formed from a plurality of commercially available plate coils 70 arranged around the inside periphery of the cylindrical column 24 forming the draft tube 14 as shown in Figs. 5 and 6. In the embodiment shown in Figs. 5 and 6, a typical draft tube circulator for use in precipitating alumina uses at least 6 plate coil elements 70, 72, 74, 76, 78, 80. It is possible to use more or fewer heat exchanger elements. Each plate coil 70 is attached to the cylindrical column 24 of the draft tube using two or more braces 82, 84. The number of braces 82, 84 depends, of course, on the size and weight of the, particular plate coil 70 used. It also should be evident to a person of ordinary skill that the braces 82, 84 must be sufficiently strong to secure a plate coil 70 against vibrations and pressures within the plate coil 70 due to the coolant flow. In addition, the braces 82, 84 must, of course, withstand the pressures and forces exerted by the slurry being pumped downwardly through the draft tube 14. Once mounted, each plate coil 70 is in fluid communication with adjacent plate coils 72-80 through inlet header 86 and outlet header 88, as shown in Figure 6. The entire heat exchange 16 assembly is fed by at least one inlet pipe 90 and at least one outlet pipe 92 as shown in Figure 5. In some instances, it may be desirable to stack two or more plate coils 70 on each pair of braces 82, 84 to provide increased heat exchange surface area.

The general operation of the improved precipitation vessel may be understood by reference to Figure 1, and will be described with reference to precipitation of alumina from pregnant Bayer process liquor. Of course, the apparatus of the present invention may be adapted for use in any precipitation process wherein the abrasive nature of the precipitated crystals can scour the coils or other heat exchange surfaces in the heat exchanger 16 in order to prevent the build up of scale which may hinder the efficiency of the heat exchanger 16. Scale, in the case of a precipitation vessel for aluminum, is actually alumina crystals which precipitate on the walls of the tank 12 and the surfaces of the draft tube 14 and heat exchanger 16, and its accumulation in limited amounts on most surfaces in the vessel 10 other than the heat exchanger 16 is thought not to interfere with efficient operation of the precipitation vessel 10.

Still referring to Fig. 1, pregnant Bayer process liquor (not shown) together with alumina trihydrate seed (not shown) is introduced into the tank 12 of the precipitation vessel 10 through an inlet (not shown). When sufficient liquor and seed has been added, the motor 32 is started, which in turn rotates the shaft 34 turning the impeller 36. The impeller 36 induces downward movement of the fluid contained in the tank 12, and the fluid moves downwardly through the draft tube 14 through the openings or slots 30a′-f′ at its base, and then back up through the annulus between the tank 12 and the draft tube 14 where it enters the funnel shaped opening 26 in the draft tube 14 to begin the cycle again. Inlet valve 54 is opened to permit entry of heat exchange fluid, which may be a coolant such as cold water, cold processed liquid, or any cold fluid stream inherent in or derived from the Bayer process circuit. Outlet valve 56 is opened to allow the coolant liquid to be drained, returned to a pump (not shown), to a cooling or refrigerating apparatus (not shown), or used as a source of heat for other aspects of aluminum production.

As stated above, when the impeller 36 achieves sufficient thrust, the slurry is forced downwardly through the draft tube 14 (in the path defined by the arrows) where it comes in contact with the heat exchanger 16. The slurry (not shown) passes in and around the pipes 38a-n of the heat exchanger 16 where excess heat contained in the slurry is absorbed into the coolant liquid (not shown) contained in those pipes 38a-n. At the same time, the rather gritty alumina particles contained in the slurry scour the surfaces of the pipes 38a-n as the particles in and around those surfaces, thereby substantially preventing accumulation of scale on the surfaces of the pipes 38a-n. By monitoring the temperature of the slurry, of the coolant at the or near the inlet valve 54, the coolant temperature at or near the outlet valve 56, and the temperature of the slurry flow of coolant may be adjusted to achieve the most appropriate temperature to speed the precipitation of alumina trihydrate from the pregnant liquor.

The embodiment depicted in Fig. 5 can be used to remove heat from slurry in the precipitation vessel in similar fashion. Alternatively, at the back end of the precipitation circuit where temperatures tend to be lower, hot condensate, hot water, or low pressure steam may be fed into the heat exchange system shown in Figs. 1, 2 or 5 to heat the process liquor inside the precipitation vessel 10. For example, during a plant-flow stoppage, or during a prolonged period of cold weather, when final circuit temperature will reach undesirably low levels, the process liquor may be warmed slightly to a temperature more suitable for alumina trihydrate precipitation.

## Claims

1. A vessel for precipitating alumina from pregnant Bayer process liquor, the vessel comprising: a tank (12) having a bottom (20) and walls (18) defining an interior volume for containing a fluid; a draft tube circulator (14) mounted inside said tank (12) and including fluid circulating means and a cylindrical column (24) having openings adjacent upper (26) and lower (28) ends; and a heat exchanger for cooling said Bayer process liquor,
characterized in that said heat exchanger (16) includes a plurality of heat exchange elements (39) with heat exchange surfaces arranged either radially or peripherally inside said cylindrical column (24) and mounted therein such that when a slurry containing abrasive particles is circulated through said draft tube circulator (14) said particles scour said heat exchange surface to substantially prevent scale accumulation on said heat exchange surfaces, and said heat exchanger (16) also includes an inlet pipe (50) extending from the heat exchanger (16) to outside the tank (12) for supplying a heat exchange fluid to the heat exchange elements (39), and an outlet pipe (52) extending from outside the tank (12) for removing the heat exchange fluid from said heat exchanger (16).

2. An apparatus in accordance with claim 1 characterized in that said draft tube circulator (14) has a plurality of legs (30) defining openings between adjacent legs (30) at said lower end and wherein said each of said heat exchange elements (39) is positioned above a respective leg (30) in said draft tube (14).

3. An apparatus in accordance with claim 1 characterized in that each of said heat exchange elements (39) comprises a plate coil.

4. An apparatus in accordance with claim 2 characterized in that each of said heat exchange elements (39) is affixed to said cylindrical column (24) of said draft tube (14).

5. An apparatus in accordance with claim 2 characterized in that each of said heat exchange elements (39) is affixed to and in fluid communication with a central support pipe (44) mounted on the bottom (20) of said tank (12) and extending partway into said draft tube cylinder (24), and wherein said central support pipe (44) carries fluid to said heat exchanger (16) and provides an additional heat exchange surface.

6. An apparatus in accordance with claim 5 characterized in that said central support pipe (44) has a constriction orifice (45) mounted above where said central support pipe (44) feeds fluid to said plurality of heat exchange elements (39).

7. An apparatus in accordance with claim 4 or 5 characterized in that said heat exchanger (16) is mounted above a level defined by settled hydrate in said tank (12).

8. An apparatus in accordance with claim 7 characterized in that each of said heat exchange elements (39) comprises an upper header pipe (40), a lower header pipe (42) and a manifold of heat exchange pipes (38) therebetween, in fluid communication with said upper and lower pipes.

9. An apparatus in accordance with claim 8 characterized in that said inlet pipe (50) and said outlet pipe (52) are connected to flow adjustment valves (54, 56) positioned outside said tank (12).

10. An apparatus in accordance with claim 4 or 5 characterized in that said heat exchange fluid is cold water or a cold process liquid, and wherein said heat exchanger (16) acts to cool said Bayer process liquor in said tank (12).

11. An apparatus in accordance with claim 4 or 5 characterized in that said heat exchange fluid is hot condensate, hot water or steam, and said heat exchanger (16) acts to warm said Bayer process liquor in said tank (12).

12. An apparatus in accordance with claim 1 characterized in that said heat exchange elements (39) are mounted peripherally on the inside of the cylindrical column (24).

## Patentansprüche

1. Behälter zum Fällen von Aluminiumoxid aus der Mutterlauge eines Bayerprozesses, umfassend: einen Tank (12) mit einem Boden (20) und Wänden (18), die ein Innenvolumen für ein Fluid festlegen; einen Saugrohrzirkulator (14) der innerhalb des Tankes (12) montiert ist und der eine Fiuidzirkulationseinrichtung und eine zylindrische Säule (24) mit Öffnungen neben oberen (26) und unteren (28) Enden aufweist; und einen Wärmetauscher zum Kühlen der Flüssigkeit des Bayerprozesses,
**dadurch gekennzeichnet, daß**
der Wärmetauscher (16) mehrere Wärmetauschelemente (39) aufweist, deren Wärmetauschflächen entweder radial oder in Umfangsrichtung innerhalb der zylindrischen Säule (24) angeordnet sind und die darin derart montiert sind, daß wenn eine Aufschlämmung, die abrasive Partikel enthält, durch den Saugrohrzirkulator (14) zirkuliert wird, diese Partikel die Wärmetauschflächen abscheuern, um im wesentlichen eine Ansammlung von Zunder an den Wärmetauschflächen zu verhindern, und daß der Wärmetauscher (16) auch ein Einlaßrohr (50) aufweist, das sich von dem Wärmetauscher (16) zur Außenseite des Tankes (12) erstreckt, um den Wärmetauschelementen (39) ein Wärmetauscherfluid zuzuführen, und daß sich ein Auslaßrohr (52) von der Außenseite des Tankes (12) erstreckt, um das Wärmetauscherfluid von dem Wärmetauscher (16) abzuführen.

2. Vorrichtung nach Anspruch 1,
**dadurch gekennzeichnet, daß**
der Saugrohrzirkulator (14) mehrere Füße (30) aufweist, die zwischen benachbarten Füßen (30) Öffnungen an dem unteren Ende festlegen, wobei jedes Wärmetauschelement (39) oberhalb des jeweiligen Fußes (30) in dem Saugrohr (14) angeordnet ist.

3. Vorrichtung nach Anspruch 1,
**dadurch gekennzeichnet, daß**
jedes Wärmetauschelement (39) eine Plattenwendel aufweist.

4. Vorrichtung nach Anspruch 2,
**dadurch gekennzeichnet, daß**
jedes Wärmetauschelement (39) an der zylindrischen Säule (24) des Saugrohres (14) befestigt ist.

5. Vorrichtung nach Anspruch 2,
**dadurch gekennzeichnet, daß**
jedes Wärmetauschelement (39) an einem zentralen Stützrohr (44) befestigt ist und mit diesem in Fluidverbindung steht, das an dem Boden (20) des Tankes (12) montiert ist und sich teilweise in den Saugrohrzylinder (24) erstreckt, wobei das zentrale Stützrohr (44) dem Wärmetauscher (16) Fluid zuführt und eine zusätzliche Wärmetauschfläche schafft.

6. Vorrichtung nach Anspruch 5,
**dadurch gekennzeichnet, daß**
das zentrale Stützrohr (44) eine Verjüngungsöffnung (45) besitzt, die oberhalb der Stelle angeordnet ist, an der das zentrale Stütztrohr (44) den mehreren Wärmetauschelementen (39) Fluid zuführt.

7. Vorrichtung nach Anspruch 4 oder 5,
**dadurch gekennzeichnet, daß**
der Wärmetauscher (16) oberhalb eines Pegels montiert ist, der durch das abgesetzte Hydrat in dem Tank (12) festgelegt wird.

8. Vorrichtung nach Anspruch 7,
**dadurch gekennzeichnet, daß**
jedes Wärmetauschelement (39) ein oberes Kopfrohr (40), ein unteres Kopfrohr (42) und einen Rohrverteiler aus Wärmetauschrohren (38) zwischen diesen in Fluidverbindung mit den oberen und unteren Rohren aufweist.

9. Vorrichtung nach Anspruch 8,
**dadurch gekennzeichnet, daß**
das Einlaßrohr (50) und das Auslaßrohr (52) mit Strömungseinstellventilen (54, 56) verbunden sind, die außerhalb des Tankes (12) angeordnet sind.

10. Vorrichtung nach Anspruch 4 oder 5,
**dadurch gekennzeichnet, daß**
das Wärmetauscherfluid kaltes Wasser oder kalte Prozeßflüssigkeit ist, und daß der Wärmetauscher (16) die Bayerprozeßflüssigkeit in dem Tank (12) kühlt.

11. Vorrichtung nach Anspruch 4 oder 5,
**dadurch gekennzeichnet, daß**
die Wärmetauscherflüssigkeit heißes Kondensat, heißes Wasser oder Dampf ist, und daß der Wärmetauscher (16) die Bayerprozeßflüssigkeit in dem Tank (12) erwärmt.

12. Vorrichtung nach Anspruch 1,
**dadurch gekennzeichnet, daß**
die Wärmetauschelemente (39) in Umfangsrichtung an der Innenseite der zylindrischen Säule (24) montiert sind.

## Revendications

1. Récipient pour la précipitation de l'alumine à partir d'une liqueur féconde du procédé Bayer, récipient qui comprend une cuve (12) ayant un fond (20) et des parois (18) définissant un volume intérieur pour contenir un fluide ; un circulateur (14) à tube d'aspiration monté à l'intérieur de ladite cuve (12) et comportant des moyens de circulation du fluide et une colonne cylindrique (24) présentant des ouvertures à côté de ses extrémités supérieure (26) et inférieure (28) ; et un échangeur de chaleur pour refroidir ladite liqueur du procédé Bayer, caractérisé en ce que ledit échangeur de chaleur (16) comprend une série d'éléments d'échange de chaleur (39) dont les surfaces d'échange de chaleur sont agencées soit radialement soit périphériquement à l'intérieur de ladite colonne cylindrique (24) et montées dans l'échangeur de façon que lorsqu'une bouillie contenant des particules abrasives circulent à travers ledit circulateur (14) à tube d'aspiration, lesdites particules décapent ladite surface d'échange de chaleur pour empêcher sensiblement l'accumulatioon du tartre sur lesdites surfaces d'échange de chaleur et ledit échangeur de chaleur (16) comporte également une conduite d'entrée (50) allant depuis l'échangeur de chaleur (16) jusqu'à l'extérieur de la cuve (12) pour fournir un fluide d'échange de chaleur aux éléments d'échange de chaleur (39) et une conduite de sortie (52) allant de l'extérieur de la cuve (12) pour soutirer le fluide d'échange de chaleur depuis ledit échangeur de chaleur (16).

2. Appareil selon la revendication 1, caractérisé en ce que ledit circulateur (14) à tube d'aspiration comprend une série de branches (30) définissant des ouvertures entre les branches adjacentes (30) à ladite extrémité inférieure et dans lequel chacun des éléments échangeurs de chaleur (39) est disposé au dessus d'une branche respective (30) dans ledit tube d'aspiration (14).

3. Appareil selon la revendication 1, caractérisé en ce que chaque élément d'échange de chaleur (39) comprend un serpentin plat.

4. Appareil selon la revendication 2, caractérisé en ce que chaque élément d'échange de chaleur (39) est fixé à ladite colonne cylindrique (24) dudit tube d'aspiration (14).

5. Appareil selon la revendication 2, caractérisé en ce que chaque élément d'échange de chaleur (39) est fixé à et un communication fluide avec une conduite centrale de support (44) montée sur le fond (20) de ladite cuve (12) et s'étendant sur une partie de la distance dans ledit cylindre (24) du tube d'aspiration, et dans lequel ladite conduite centrale du support (44) amène le fluide audit échangeur de chaleur (16) et constitue une surface supplémentaire d'échange de chaleur.

6. Appareil selon la revendication 5, caractérisé en ce que ladite conduite centrale de support (44) présente un orifice d'étranglement (45) sur le dessus où ladite conduite centrale de support (44) amène du fluide à ladite série d'éléments d'échange de chaleur (39).

7. Appareil selon la revendication 4 ou 5, caractérisé en ce que ledit échangeur de chaleur (16) est monté au dessus du niveau défini par l'hydrate déposé dans ladite cuve (12).

8. Appareil selon la revendication 7, caractérisé en ce que chaque élément d'échange de chaleur (39) comprend une conduite collectrice supérieure (40), une conduite collectrice inférieure (42) et un collecteur de conduites d'échange de chaleur (38) entre elles, en communication fluide avec lesdites conduites supérieure et inférieure.

9. Appareil selon la revendication 8, caractérisé en ce que ladite conduite d'entrée (50) et ladite conduite de sortie (52) sont reliées à des soupapes de réglage d'écoulement (54,56) disposées à l'extérieur de ladite cuve (12).

10. Appareil selon la revendication 4 ou 5, caractérisée en ce que ledit fluide d'échange de chaleur est l'eau froide ou un liquide froid de traitement, et dans lequel ledit échangeur de chaleur (16) agit pour refroidir ladite liqueur du procédé Bayer dans ladite cuve (12).

11. Appareil selon la revendication 4 ou 5, caractérisé en ce que ledit fluide d'échange de chaleur est un produit de condensation chaud, l'eau chaude ou la vapeur d'eau, et ledit échangeur de chaleur (16) réchauffe ladite liqueur du procédé Bayer dans ladite cuve (12).

12. Appareil selon la revendication 1, caractérisé en ce que lesdits éléments d'échange de chaleur (39) sont montés sur le mode périphérique sur l'intérieur de la colonne cylindrique (24).
